# EUROPEAN PATENT SPECIFICATION

(11) **EP 1 383 965 B1**
(45) Date of publication and mention of the grant of the patent: **04.04.2012**
(21) Application number: 02733599.1
(22) Date of filing: 26.04.2002
(51) Int. Cl.: E02D 27/52, F03D 11/04, B63B 21/27, B63B 21/50

(54) **MARINE STRUCTURE**
MEERESBAUWERK
STRUCTURE MARINE

(30) Priority: 26.04.2001 NL 1017946; 18.05.2001 NL 1018109; 18.05.2001 NL 1018110
(43) Date of publication of application: 28.01.2004
(73) Proprietor: Suction Pile Technology B.V., 3447 GG Woerden (NL)
(72) Inventor: RIEMERS, Mark, Erik, NL-3447 GG Woerden (NL)
(74) Representative: Assendelft, Jacobus H.W.
(86) International application number: PCT/NL2002/000283
(87) International publication number: WO 2002/088475

(56) References cited:
- DE-U- 20 100 588
- NL-C- 1 011 740

## Description

This invention relates to a marine structure according to the preamble of claim 1 and to a method of transporting a marine structure according to the preamble of claim 8.

Suction piles and their way of installing are, among others, known from GB-B-2300661 and EP-B-0011894, which disclosures are enclosed in here by reference. Briefly, a suction pile is a thin walled steel cylinder, closed at at least one longitudinal end, that is located on the subsea bottom with the opposite end and penetrates the subsea bottom with the aid of a suction created within the cylinder. The creation of the suction can be with the aid of a suction source, such as a pump, being on, or close to or at a distance (e.g. above the water surface, e.g. at a vessel) from the suction pile. After use, the suction pile can easily be removed by creating an overpressure within the cylinder, e.g. by pumping in (sea)water. Thus the required equipment for installing and removing a suction pile is substantially less elaborated, complicated and costly compared to the use of ram piles, for which among others, an under water ramming system is required.

DE 201 00 588 U, being the closest prior art document, discloses an off shore wind turbine having a foundation part with three suction piles. Its upper structure part comprises an upright pole bearing the wind turbine at its top end. This marine structure is transported over water in a stretched condition, either towed while independently floating or completely loaded onto a vessel. After arrival at the installation location, while independently floating in the water, it is tilted upright into its operative position and then this marine structure is lowered onto the sea bottom while keeping its upright position.

NL 1 011 740 C discloses a self floating and self installing marine structure having a foundation part with three suction piles. Its upper structure part comprises an upright pole bearing a platform at its top end. This marine structure is transported over water in the upright, operative position, towed while independently floating in the water. After arrival at the installation location, while independently floating in the water, this marine structure is lowered onto the sea bottom while keeping its upright position.

The object of the invention is a simplified method for installing a marine structure resting on the under water surface, possibly projecting above the water surface. Therefore the invention is as according to claims 1 and 10. The marine structure has a foundation part and a upper structure part extending upward there from, wherein said foundation part has at least one suction pile adapted to at least partially penetrate the bottom during installing, and wherein preferably said upper structure part has a dimension sufficient such that after the marine structure is installed at the operation location, it projects above the water surface and/or contains a device, such as a wind or water turbine or an oil or gas production platform with e.g. helicopter deck. This marine structure is at least substantially in its operating position fixed to a floating transport device or vessel, such as a pontoon or barge, to be transported over water. For said transport and the subsequent installing procedure measurements are taken such that said marine structure is positioned at least partly next to or below the vessel in an orientation such that said marine structure from its fixed position to the vessel can be lowered onto the subsea bottom, while suspending from at least one flexible pulling means extending from said vessel and in a stable balanced position. This balance position is obtained by convenient locating of the centre of gravity of the marine structure, such as keeping it in a tilted position relevant to its operating position and/or by using ballast.

In that way the marine structure can be lowered onto the subsea bottom without the requirement to initially being tilted and/or upward and/or sideways translated relevant to the vessel. Thus cost, time, energy, environment and material savings are possible and also the work can be safer.

In the annexed drawing the presently most preferred embodiments are shown for illustrative purposes.
Fig. 1 and 2 show the first embodiment in a side and top view, installed onto the subsea bottom.
Fig. 3 and 4 show the second embodiment in the views according to fig. 1 and 2;
Fig. 5 shows a side view of the installation procedure from a vessel;
Fig. 6 shows a side view of the installation procedure from a vessel in less deep water; and

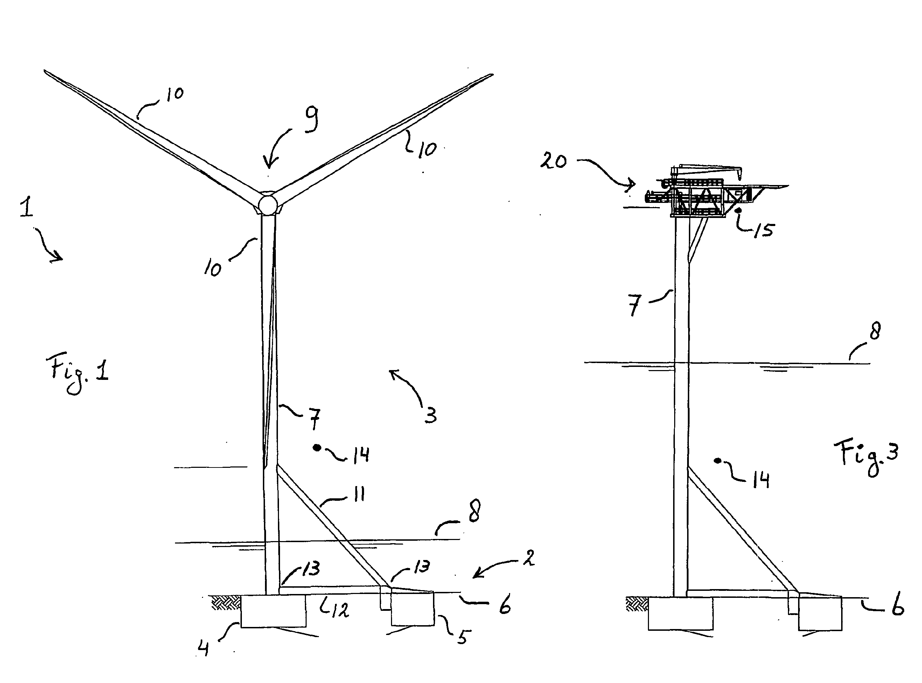

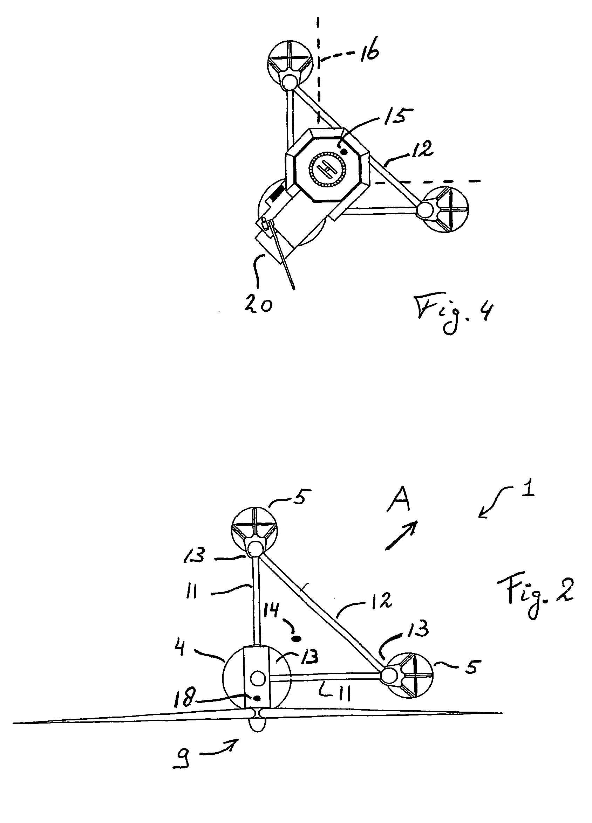

Fig. 1 and 2 show a marine structure 1 with a foundation part 2 and a upper structure part 3. The foundation part 2 has at least one, preferably at least two, such as in this example three mutually spaced suction piles 4, 5. The upper structure part 3 extends preferably at least substantially completely above the suction pile 4, which has preferably a substantially larger bearing or anchoring capacity within the subsea bottom related to the two other suction piles 5. In this embodiment this is obtained in that the suction pile 4 has a substantial, preferably at least 25% increased diameter. It is feasible that all suction piles 4, 5 have an at least substantially equal dimension, or that at least one suction pile has a larger dimension, preferably diameter, than at least one other suction pile.

The upper structure part 3 has preferably an elongated body 7 that preferably projects far above the water surface 8 after installation on the subsea bottom. For application with an oil/gas platform the body 7 projects e.g. at least 5 m, preferably at least 10 m, most preferably at least 20 m above the water surface. For application with a wind turbine the body 7 e.g. projects at least 20 m, more preferably at least 30 m, most preferably at least 60 m above the water surface. This body 7 is preferably column shaped. In this example the body 7 is a bending and torsion rigid tube or pile with a diameter of preferably at least about 0,75 m, more preferably at least 1 m, such as at least about 2 m. In an alternative the body 7 can contain a space frame structure.

The elongated body 7 is preferably mounted on top of the suction pile 4. At a distance above the lower side of the body 7 it preferably has mounted stay or brace elements. These elements 11 are with their opposite end mounted to a relevant suction pile 5. With these elements 11 at least a part of the bending and/or torsion load in the body 7 is borne by the suction piles 5. These elements 11 can be flexible , e.g. a cable or chain, such that they can only bear pulling loads from the body 7. Preferably they are however buckle rigid, e.g. a tube, such that they can bear pulling and compression loads from the body 7. Although the drawings show that these elements 11 extend according to an inclined straight line relevant to the body 7, another arrangement is feasible, e.g. buckled or bent in at least one location. It is also feasible that (not illustrated) preferably elongated buckle stiffeners, such as a rod or cable, are mounted to an element 11 in at least one position between its ends and to e.g. the body 7 or the suction pile 4 or some other element of the foundation part 2 or upper structure part 3.

Preferably horizontal pull and/or compression rigid rod like elements 12 extend between the suction piles 4, 5. Their object is among others, to keep the suction piles 4, 5 at the desired spacing during transport over water and lowering onto the subsea bottom. At least one of these elements 12 could be removed or replaced by an alternative structure with similar function. The element 12 extending between the suction piles 5 with smaller diameter is easiest to remove or replace. A brace 11 is positioned right above a tube 12, such that two tubes 12 in fig. 2 are covered by one brace 11 each time.

The upper structure part 3 carries a wind turbine 9 of a type known as such, in this embodiment with horizontal rotation axis and at least one wind driven blade 10 mounted thereto, wherein the rotation axis can be swivelled around an upright axis to orientate the blade 10 relevant to the wind. In this embodiment the wind turbine 9 can be swivelled around the longitudinal axis of the body 7.

The marine structure 1 has a relatively large dimension and will accordingly have a weight typically at least 30,000 kg. For a marine structure 1 which remains completely under water, the weight will be about 50,000 kg or more. For a structure 1 extending above the water the weight will be about 100,000 kg or more.

The marine structure 1 is equipped with at least one, preferably at least two, most preferably at least three mutually spaced hoisting points 13, wherein in top view those hoisting points 13 preferably mutually limit a triangular or multi angular area. Preferably each of these hoisting points 13 is located in the proximity of a suction pile 4, 5, such as at the cover thereof.

Preferably the centre of gravity 14 of the marine structure 1 is located at the position of a hoisting point 13 or between the hoisting points, as seen in top view. This position of the centre of gravity 14 is preferably obtained by ballast, preferably at a location at the side of the hoisting point 13 at the larger suction pile 4 facing at least one of the smaller suction piles 5, more preferably in the proximity of or at the smaller suction piles 5, in top view. Advantageously a small suction pile is therefore equipped with concrete or other ballast material, e.g. present in the upper part of the suction pile 5.

It will be appreciated that the location in top view of the centre of gravity 14 is influenced by the position taken by the wind turbine 9, of which the centre of gravity 18 is present aside the longitudinal axis of the body 7. The position of the wind turbine 9 according to fig. 1-2 is therefore less convenient for the desired position of the centre of gravity.

As fig. 2 shows, the centre of gravity 14 keeps a large distance from the suction piles 4, 5. It will be appreciated to keep the level of the centre of gravity above the suction piles 4, 5 sufficient small, such that some tilting, e.g. during lowering onto the subsea bottom, of the marine structure 1 around the top side of the large suction pile 4 is allowable without the centre of gravity coming outside the area delimited by the hoisting points 13, in top view.

To be able to save ballast, one could maintain the marine structure 1 slightly tilted during transport over water and/or lowering onto the subsea bottom in the direction wherein, in top view, one tries to bring the centre of gravity 14 to a distance from the hoisting point 13. In the illustrated example one could tilt the marine structure in the direction of arrow A for this purpose. Preferably said tilting is such small that during the last phase while installing, wherein the lower side of the foundation part 2 starts to contact the subsea bottom, the marine structure automatically erects with ongoing lowering. This can e.g. be achieved by taking care that in the tilted position of the marine structure the centre of gravity 14 is positioned above the lowest point and the highest point at the lower side of the foundation part 2, which lowest and highest point are at least substantially at equal level if the marine structure stands upright.

The embodiment according to fig. 3-4 differs from that of fig. 1-2 in that the wind turbine 9 is replaced by an oil/gas platform 20. This platform 20 is mounted in an asymmetric position to the upper structure part 3 such that the centre of gravity 15 of this platform is located, in top view, at the side of a hoisting point 13 facing at least one of the other hoisting points 13, more preferably at a location between the a three or multi angle forming hoisting points 13, which contributes to obtaining a desired position of the centre of gravity 14.

For transport over water at least one, more preferably at least two, most preferably at least three hoisting points 13, which in top view form preferably a three or multi angle, are mounted to a hoisting device, which is preferably located at the vessel, wherein preferably the hoisting device is designed such that at least one, preferably at least two hoisting points 13 can be lifted or lowered, independent from at least one other hoisting point 13. Fig. 4 shows in phantom the outline of the vessel 16. Hoisting members, such as hoisting cables, are connected to the three hoisting points 13 of the marine structure 1 and to hoisting equipment 17 of the hoisting device, such as winches or pulley blocks, which are present at the vessel 16 and project sideways there from. In the illustrated position the marine structure is transported over water. In top view the suction piles 4, 5 and the upper structure part 3 are present aside of the vessel 16, while the element 12, extending between the small suction piles 5, extends below the vessel 16. A part of the wind turbine 9 is present at a large distance above the vessel 16. Compared to the illustration of fig. 1-2, the wind turbine is swivelled around the longitudinal axis of the body 7, such that the centre of gravity 14 is brought more remote from the hoisting point 13 at the larger suction pile 4, which is more convenient for the stability of the marine structure, suspending from the pulley blocks 17. In stead of mounting of the marine structure 1 at a corner of the vessel 16, as shown in fig. 4, it is also possible to mount a, e.g. substantial wider, marine structure 1 at two corners of the vessel 16.

For transport over water the marine structure 1 can be kept immovable relative to the vessel 16 in a convenient manner as shown in fig. 4, such as by being stowed at it (not shown) or by being pulled against the bottom side of stops (not shown).

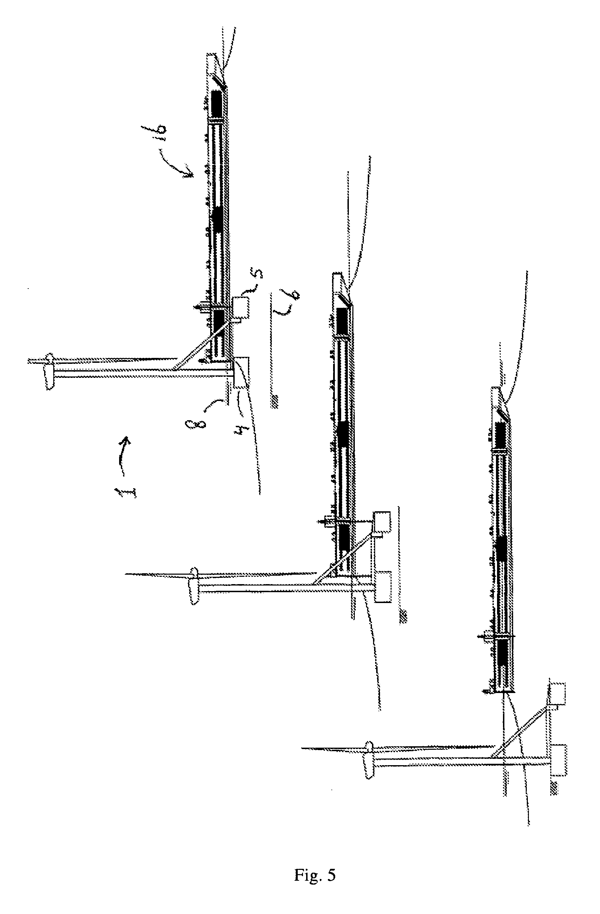

Thus the marine structure 1, possibly after removal of the equipment to keep the marine structure immovable at the vessel 16 during transport, suspending with its hoisting points 13 from the pulley blocks 17, can be immediately lowered onto the subsea bottom 6 from the position shown in fig. 4, such as is shown in fig. 5. While lowering, the marine structure 1 is not obstructed by the vessel 16 and the marine structure moves exclusively in vertical direction relative to said vessel 16.

During lowering onto the subsea bottom 6 the vessel 16 is preferably fixed in position. This is possible by means of directly anchoring the vessel 16 to the subsea bottom 6, or by anchoring the towing vessels (not shown) connected to the vessel 16 to the subsea bottom. As a rule the anchoring lines will be controllably shortened and/or lengthened, and the anchoring points at the subsea bottom 6 determine a three or multi angle within which the vessel is present, in top view.

The vessel 16 will as a rule substantially be designed to provide buoyancy during transport and installation, and contains preferably a plurality of ballast tanks next and behind each other, such that it can be properly trimmed. The vessel 16 can be propelled by at least one towing vessel and therefore does not have to be equipped with an own propulsion and/or housing for personnel. The vessel 16 preferably has an at least substantially flat bottom and top side and/or in top view an at least substantially straight bow and/or stern and/or boards, which is convenient to transport the marine structure 1.

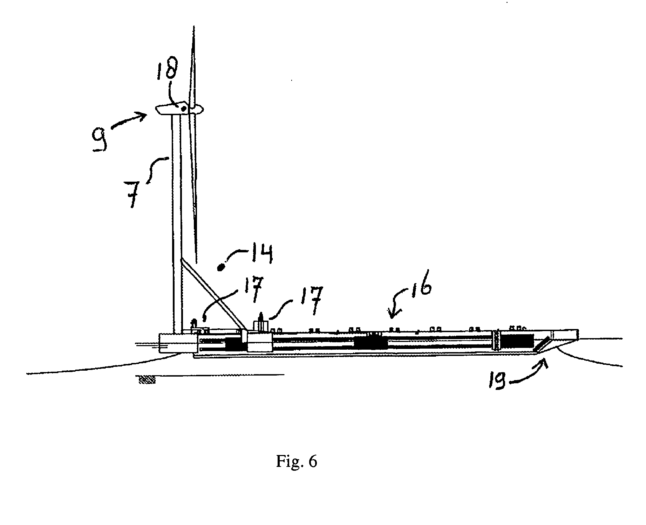

The embodiment according to fig. 6 differs from that of fig. 5 in that the element 12 between the smaller suction piles is removed. That is why the marine structure 1 can be suspended from the vessel 16 at a higher level, e.g. such that the bottom side of the foundation part 2 is at least at substantially the same level as the bottom side of the vessel, e.g. is present above said bottom side, as shown in fig. 8. Thus, compared to the embodiment of fig. 7, the draught of the combination marine structure 1 and vessel 16 is made smaller, such that the invention also becomes applicable for shallow water depths.

After the marine structure has been lowered onto the subsea bottom, an under pressure is generated in the suction piles 4, 5 such that they are sucked into the subsea bottom. Then the installation is completed.

It will be appreciated that with the vessel 16 simultaneously more than one marine structure 1 can be transported over water in their installation and/or working position. E.g. a second, possibly at least substantially identical, marine structure 1 can be present at the diagonal opposite corner of the vessel 16.

A possible variant of the invention contains more than three suction piles 4, 5 e.g. one or two additional smaller suction piles 5, present at the other side of the larger suction pile 4, such that in top view the foundation part 2 is at least substantially symmetrical relative to a mirror surface extending through the larger suction pile 4, and the larger suction pile 4 is present between said four smaller suction piles 5. As with the above described embodiments, the hoisting points 13 are preferably present at the larger suction pile 4 and the two smaller suction piles 5 at one side of the larger suction pile 4. With additional ballast or other provisions then preferably care is taken such that the centre of gravity 14 is located in the desired position in top view, i.e. preferably between the hoisting points 13. The marine structure can also be designed such that at least one suction pile 4, 5 is located straight below the vessel 16 during transport and/or lowering onto the subsea bottom. Another possibility is to remove at least one of the suction piles 4, 5 or replace it by a foot bearing onto the subsea bottom, with possibly parts there below penetrating the subsea bottom by the action of weight, such as a so called "skirt". E.g. an embodiment based on fig. 1-4 is feasible, wherein all small suction piles 5 and the elements 11 have been removed, while the elements 12 are present at a higher level above the suction pile 4 and to a distance from the suction pile 4 have a hoisting point 13, such that in top view the centre of gravity 14 is located between the hoisting points 13. The body 7 can be substantially shorter, e.g. such that the marine structure is completely submerged after installation.

## Claims

1. A combination of a vessel and a marine structure with a foundation part (2) and an upper structure part (3) extending there from upward, wherein said foundation part has at least one suction pile (4, 5), preferably at least three mutually spaced suction piles, designed to at least partly penetrate the subsea bottom during installation, **characterised in that** said marine structure is at least substantially in its operating position fixed to and suspended from said vessel by a flexible pulling element of the vessel to be below or aside it to be transported over water in an orientation such that the marine structure from its position mounted to the vessel can be immediately lowered onto the subsea bottom while suspending from said flexible pulling element and in a stable balanced position.

2. The combination according to claim 1, wherein the marine structure is held in a stable balanced position by convenient positioning of its centre of gravity (14) such as by keeping it in an inclined attitude relative to its operating attitude and/or by making use of ballast.

3. The combination according to any of claim 1-2, wherein in top view the suction piles (4, 5) and the upper structure part (3) are aside the vessel (16).

4. The combination according to any of claim 1-3, wherein the marine structure is provided with mutually spaced hoisting points, preferably each suction pile having a hoisting point (13), seen in top view mutually limiting a triangular or multi angular area and preferably wherein the centre of gravity (14) of the marine structure is located between the hoisting points (13), seen in top view.

5. The combination according to any of claim 1-4, wherein equipment is present with which the marine structure is kept immovable at the vessel (16) during transport, and/or the foundation part has at least one lager suction pile (4) and a smaller suction pile (5).

6. The combination according to any of claim 1-5, wherein the hoisting points (13) can be independently lifted relative to the vessel (16), and/or the marine structure is mounted to a corner of the vessel (16).

7. The combination according to any of claim 1-6, wherein said upper structure part projects above water after installation and/or contains a device, such as a wind or water turbine or an oil or gas production platform with e.g. helicopter deck.

8. A method of transporting a marine structure across a body of water with the aid of a vessel towards an installation location of said marine structure, wherein said marine structure has a foundation part (2) and an upper structure part (3) extending there from upward, wherein said foundation part has at least one suction pile (4, 5), preferably at least three mutually spaced suction piles, designed to at least partly penetrate the subsea bottom during installation, **characterised in that** said marine structure is at least substantially in its operating position fixed to and suspended from said vessel by <-> to be below or aside it during transport over said water in an orientation such that the marine structure from its position mounted to the vessel can be immediately lowered onto the subsea bottom while suspending from <a flexible pulling element of the vessel> said flexible pulling element and in a stable balanced position, whereafter the marine structure from its position mounted to the vessel is immediately lowered onto the subsea bottom while suspending from said flexible pulling element and in said stable balanced position.

9. The method according to claim 8, wherein the marine structure is kept immovable at the vessel (16) during transport, preferably by the aid of equipment, e.g. is stowed at the vessel or is pulled against the bottom side of stops at the vessel.

10. The method according to claim 8 or 9, wherein after the marine structure has been lowered onto the subsea bottom, an under pressure is generated in the suction piles (4, 5) such that they are sucked into the subsea bottom, for completion of the installation.

## Patentansprüche

1. Eine Kombination aus ein Schiff und ein Meeresbauwerk mit einem Fundierungteil (2) und eine obere Aufbau (3) welche sich von dem Fundierungteil aus nach oben erstreckt, wobei dieser Fundierungteil mindestens eine Saugpfahl (4, 5) hat, vorzugsweise mindestens drei gegenseitig ein Abstand haltende Saugpfähle, ausgeführt um zumindest teilweise das Meerboden ein zu dringen während der Installation, **dadurch gekennzeichnet, dass** sagte Meeresbauwerk mindestens hauptsächlich in seine operative Position fixiert und vom besagten Schiffes suspendiert ist durch eine flexible Ziehelement des Schiffes, um darunter oder zur Seite davon zu sein um über Wasser transportiert zu werden in eine Lage, so dass der Meeresbauwerk von seine Lage montiert an dem Schiff sofort auf den Meerboden abgesenkt werden kann während aufgehängt an besagte biegsame Ziehelement und in einem stabilen ausgeglichenen Lage.

2. Der Kombination gemäß Anspruch 1, wobei der Meeresbauwerk sich befindet in einem stabilen balancierte Lage durch bequeme Positionierung seinen Massenschwerpunkt (14) wie z. B. dadurch, dass es sich befindet in eine geneigte Lage gegenüber seiner operativen Lage und/oder durch Verwendung von Ballast

3. Der Kombination gemäß eine der Ansprüche 1-2, wobei in Draufsicht der Saugpfähle (4, 5) und der obere Aufbau (3) sich zur Seite des Schiffs (16) befinden, und/oder die Saugpfähle (4) sind ganz oder für ein Teil unter Wasser (8) befinden.

4. Der Kombination gemäß eine der Ansprüche 1-3, wobei der Meeresbauwerk gegenseitig eine Abstand haltende Hochziehpunkten hat, vorzugsweise jedes Saugpfahl hat eine Hochziehpunkt (13), welche gesehen in Draufsicht gegenseitig einen dreieckige oder vieleckig Bereich begrenzen und vorzugsweise, wobei der Schwerpunkt (14) des Meeresbauwerkes sich befindet zwischen den Hochziehpunkten (13), in der Ansicht von oben gesehen, und/oder oben den Hochziehpunkten (13), in der Ansicht von der Seite gesehen.

5. Der Kombination gemäß eine der Ansprüche 1-4, wobei Ausrüstung vorhanden ist, mit denen den Meeresbauwerks unbeweglich auf dem Schiff (16) während des Transports gehalten ist, und/oder der Fundierungteil hat mindestens einem großen Saugpfahl (4) und einem kleineren Saugpfahl (5).

6. Der Kombination gemäß eine der Ansprüche 1-5, wobei die Hochziehpunkten (13) unabhängig voneinander relativ zum Schiff (16) aufgehoben werden können, und/oder der Meeresbauwerks ist in eine Ecke des Schiffes (16) montiert.

7. Der Kombination gemäß eine der Ansprüche 1-6, wobei sagte obere Aufbau (3) über Wasser bleibt nach der Installation und/oder enthält ein Gerät, wie ein Wind- oder Wasserturbine oder ein Öl- oder Gasproduktionsplattform mit z.B. Helikopterdeck

8. Verfahren zum Transportieren einer Meeresbauwerk über einem Wasserkörper mit Hilfe eines Schiffes zu ein Installationsort von diesen Meeresbauwerk, wobei dieser Meeresbauwerk ausgestattet ist mit einem Fundierungteil (2) und eine obere Aufbau (3) welche sich von dem Fundierungteil aus nach oben erstreckt, wobei diese Fundierungteil mindestens eine Saugpfahl (4, 5) hat, vorzugsweise mindestens drei gegenseitig ein Abstand haltende Saugpfähle, ausgeführt um zumindest teilweise das Meerboden ein zu dringen während der Installation, **dadurch gekennzeichnet, dass** dieser Meeresbauwerk mindestens hauptsächlich in seine operative Position fixiert und vom besagten Schiffes suspendiert ist durch eine flexible Ziehelement des Schiffes, um darunter oder zur Seite davon zu sein um über Wasser transportiert zu werden in eine Lage, so dass der Meeresbauwerk von seine Lage montiert an dem Schiff sofort auf den Meerboden abgesenkt werden kann während aufgehängt an besagte biegsame Ziehelement und in einer stabilen ausgeglichenen Lage, wonach dieser Meeresbauwerk aus seiner Lage montiert an dem das Schiff sofort abgesenkt wird auf den Meerboden während aufgehängt an dem biegsame Ziehelement und in besagten Stabile ausgeglichenen Lage.

9. Verfahren gemäß Anspruch 8, wobei der Meeresbauwerk unbeweglich an dem Schiff (16) während des Transports gehalten wird, vorzugsweise mit Hilfe einer Ausrüstung, z. B. ist verstaut auf dem Schiff oder gezogen gegen die Unterseite von Haltestellen auf dem Schiff.

10. Verfahren gemäß Anspruch 8 oder 9, wobei nachdem der Meeresbauwerk auf den Meerboden abgesenkt war, eine Vakuum hervorgerufen wird in den Saugpfählen (4, 5), so dass sie in dem Meerboden gesaugt werden, für die Fertigstellung der Installation.

## Revendications

1. Une combinaison d'un navire et une structure marine avec une partie fondation (2) et une partie structure supérieure (3) s'étendant à partir de la partie fondation vers le haut, dans lequel la partie fondation a au moins un pile de succion (4, 5), de préférence au moins trois mutuellement espacées piles de succion, conçus pour pénétrer au moins en partie le fond sous-marin lors de l'installation, **caractérisé en ce que** la structure marine est au moins substantiellement dans sa position d'exploitation fixe et suspendu à le navire par une élément de tirer souple du navire pour être inférieure ou de côté le navire pour être transportés sur de l'eau dans une orientation telle que la marine structure à partir de sa position montée sur le navire peut être immédiatement abaissée sur le fond sous-marin tout en suspendant à l'élément de tirer souple et dans une position équilibrée stable.

2. Combinaison selon la revendication 1, en ce que la marine structure se tient dans une position équilibrée stable par positionnement convenable de son centre de gravité (14) comme en gardant une attitude inclinée par rapport à son attitude d'exploitation et/ou en faisant usage de ballast

3. Combinaison selon la revendication 1 ou 2, en ce que en vue de dessus les piles de succion (4, 5) et la partie structure supérieure (3) sont de côté le navire (16), et/ou les piles de succion (4) sont totalement ou partiellement sous le niveau de l'eau (8)

4. Combinaison selon l'une quelconque des revendications 1-3, en ce que la marine structure est fournie avec mutuellement espacées points de levage, de préférence chaque pile de succion ayant un point de levage (13), en vue de dessus mutuellement limitant un domaine triangulaire ou multi angulaire, de préférence dans lequel le centre de gravité (14) de la marine structure est situé entre les points de levage (13), en vue de dessus et/ou au-dessus les points de levage (13), en vue de côté

5. Combinaison selon l'une quelconque des revendications 1-4, en ce que équipement est présent avec laquelle la structure marine est conservée immeuble au navire (16) au cours du transport, et/ou la partie fondation a au moins une grande pile de succion (4) et une petite pile de succion (5).

6. Combinaison selon l'une quelconque des revendications 1-5, en ce que les points de levage (13) peuvent être levés de façon indépendante par rapport au navire (16), et/ou la structure marine est montée dans un coin du navire (16

7. Combinaison selon l'une quelconque des revendications 1-6, en ce que ladite partie structure supérieure projets au-dessus de l'eau après l'installation et/ou contient un appareille, comme une turbine de vent ou de l'eau ou une plateforme de production de pétrole ou de gaz avec par exemple pont hélicoptère

8. Une Procède de transport une structure marine à travers un corps d'eau à l'aide d'un navire vers un emplacement d'installation de ladite structure marine, en ce que la structure marine a une partie fondation (2) et une partie structure supérieure (3) s'étendant à partir de la partie fondation vers le haut, dans lequel la partie fondation a au moins un pile de succion (4, 5), de préférence au moins trois piles de succion mutuellement espacées, conçus pour pénétrer au moins en partie le fond sous-marin lors de l'installation, **caractérisé en ce que** la structure marine est au moins substantiellement dans sa position d'exploitation fixe et suspendu a le navire par une élément de tirer souple du navire pour être inférieure ou de côté du navire pour être transportés sur de l'eau dans une orientation telle que la marine structure à partir de sa position montée sur le navire peut être immédiatement abaissée sur le fond sous-marin tout en suspendant à l'élément de tirer souple et dans une position équilibrée stable, après quoi la structure marine à partir de sa position montée sur le navire est immédiatement abaissé sur le fond sous-marin tandis que suspendre à ladite élément traction souple et dans ladite stable équilibré position

9. Procède selon la revendication 8, en ce que la structure marine est conservée immeuble au navire (16) au cours du transport, préférablement à l'aide de l'équipement, par exemple est arrimée au navire ou est tirée contre le côté inférieur des arrêts sur le navire

10. Procède selon la revendication 8 ou 9, en ce que après la structure marine a été abaissée sur le fond sous-marin, une sous pression est généré dans les piles de succion (4, 5) tels qu'ils sont aspirés dans le fond sous-marin, pour compléter l'installation.
